# FASCICULE DE BREVET EUROPEEN

(11) **EP 2 840 633 B1**
(45) Date de publication et mention de la délivrance du brevet: **17.10.2018**
(21) Numéro de dépôt: 14184728.5
(22) Date de dépôt: 28.01.2011
(51) Int. Cl.: H01M 4/58, H01M 4/62, H01M 10/0525, C01G 49/00

(54) **Accumulateurs au lithium à base de phosphate de fer lithié et de carbone**
Lithium-Akku auf Lithiumeisenphosphat und Kohlenstoffbasis
Lithium accumulators based on lithiated iron phosphate and carbon

(30) Priorité: 28.01.2010 EP 10151986
(43) Date de publication de la demande: 25.02.2015
(62) Demande divisionnaire de: 11701509.9
(73) Titulaire: Prayon, 4480 Engis (BE); Commissariat à l'Energie Atomique, 75015 Paris (FR)
(72) Inventeur: Patoux, Sébastien, 38600 Fontaine (FR); Martinet, Sébastien, 38210 ST. QUENTIN/ISERE (FR); Launois, Sébastien, 38100 GRENOBLE (FR); Gourgue, Alain, 4287 LINCENT (BE); Germeau, Alain, 1160 AUDERGHEM (BE)
(74) Mandataire: Gevers Patents

(56) Documents cités:
- EP-A1- 1 261 050
- EP-A2- 1 193 783
- EP-A2- 1 195 827
- EP-A2- 2 075 864
- WO-A1-2008/067677
- WO-A1-2009/117871
- US-A1- 2009 061 314

## Description

L'invention se rapporte à un matériau d'électrode composite comprenant du phosphate de fer lithié et du carbone, ainsi qu'à un accumulateur au lithium comportant au moins deux électrodes à base de matériaux actifs différents, dont une est à base dudit matériau d'électrode composite comprenant du phosphate de fer lithié, et un électrolyte au travers duquel les cations Li⁺ ont la possibilité de migrer d'une électrode à l'autre en fonction de l'utilisation.

Les accumulateurs au lithium sont de plus en plus utilisés comme sources d'énergie autonome, en particulier, dans les équipements portables, où ils remplacent progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie nettement supérieures à celles proposées par les filières NiCd et NiMH. Les nouvelles générations d'accumulateurs au lithium sont déjà en voie de développement pour des applications toujours plus diversifiées (automobile hybride ou tout électrique, stockage de l'énergie de cellules photovoltaïques, ...).

Plus spécifiquement, les composés actifs d'électrodes utilisés dans les accumulateurs commerciaux sont, pour l'électrode positive, des composés lamellaires tels que LiCoO₂, LiNiO₂ et les mixtes Li(Ni,Co,Mn,Al)O₂ ou des composés de structure spinelle de composition proche de LiMn₂O₄. L'électrode négative est généralement du carbone (graphite, coke,...) ou éventuellement le spinelle Li₄Ti₅O₁₂ ou un métal formant un alliage avec le lithium (Sn, Si, ...). Les capacités spécifiques théoriques et pratiques des composés d'électrode positive cités sont respectivement d'environ 275 mAh/g et 140 mAh/g pour les oxydes de structure lamellaire (LiCoO₂ et LiNiO₂) et 148 mAh/g et 120 mAh/g pour le spinelle LiMn₂O₄. Dans tous les cas, une tension de fonctionnement par rapport au lithium métallique voisine de 4 Volts est obtenue.

Par les termes « capacité spécifique théorique », on entend, au sens de l'invention la capacité spécifique exprimée en mAh/g calculée par la formule théorique suivante : nombre de moles d'ions Li+ théoriquement échangées entre l'électrode positive et l'électrode négative (c'est-à-dire le nombre de moles d'ions Li+ théoriquement extraites de façon réversible du composé actif de l'électrode positive) multiplié par un faraday (96 500 C) divisé par 3600 secondes et divisé par la masse molaire du composé en g/mol.

Par les termes « capacité spécifique pratique », on entend, au sens de l'invention la capacité spécifique réelle mesurée en mAh par gramme du composé.

Depuis l'émergence des accumulateurs au lithium, plusieurs générations de matériaux d'électrodes ont successivement fait leur apparition [J.-M. Tarascon and M. Armand, Nature, 414 (2001) 359-367 : Issues and challenges facing rechargeable lithium batteries]. Le concept d'insertion/extraction de lithium dans/depuis des matériaux d'électrodes a été étendu il y a quelques années aux structures tridimensionnelles construites à partir d'entités polyanioniques de type XOₙ^{m-} (X = P, S, Mo, W...), de telle sorte que les matériaux de structure de type olivine par exemple suscitent actuellement un réel engouement. A titre d'exemple, le brevet FR2848205 revendique l'utilisation de phosphate de fer lithié dopé au bore comme matériau actif de l'électrode positive, tel que LiFe_{0,95}B_{0,033}PO₄.

Pour répondre aux nouveaux marchés de l'automobile hybride et électrique, et du solaire photovoltaïque, par exemple, la filière des accumulateurs Li-ion, généralement basée sur le couple LiCoO₂/graphite (électrode positive/électrode négative), devra être modifiée. Les contraintes de coût et de volume de production, de performances en puissance et de sûreté imposent l'abandon, entre autres, du composé actif d'électrode positive LiCoO₂ (et ses dérivés) utilisé jusqu'à présent. Dans cette optique, le phosphate de fer et de lithium ou phosphate de fer lithié LiFePO₄ et ses dérivés, de structure de type olivine, s'imposent actuellement comme une alternative à LiCoO₂ et aux autres oxydes lamellaires et spinelles conventionnels en tant que matériau d'électrode positive d'accumulateurs Li-ion.

Il existe à ce jour de nombreux procédés de fabrication de phosphate de fer lithié LiFePO₄, comme par exemple celui décrit dans les documents EP1261050, WO2008/067677, EP2075864, US 2009/0061314. Le document EP1261050 enseigne un mélange d'une solution aqueuse de nitrate de fer(III) avec du phosphate de lithium à quantité équimolaire. Le mélange est ensuite soumis à une évaporation pour obtenir un mélange homogène de précurseurs contenant Li, Fe et PO₄ dans les quantités stoechiométriques de LiFePO₄. Le fer (III) est ensuite réduit en fer (II) durant une étape de recuit éventuellement avec un broyage. Le composé LiFePO₄ est ainsi formé par recuit est sous forme de particules dont les tailles diffèrent en fonction de la température de recuit.

Le LiFePO₄ est ultérieurement mélangé à du noir d'acétylène et le tout est broyé dans un broyeur à billes de laboratoire pour former des particules de LiFePO₄ revêtues de carbone. La capacité spécifique pratique de la poudre obtenue est de 114 mAh/g, ce qui reste très faible pour un vitesse de charge/décharge de C/5.

D'autres procédés de fabrication de ce matériau de cathode existent également. Toutefois aujourd'hui, aucun de ces procédés n'est utilisable pour une production industrielle rentable pour produire un matériau de cathode présentant des performances électrochimiques utilisables dans les applications souhaitées. En effet, soit le procédé de fabrication n'est pas industrialisable, soit le matériau obtenu n'est pas assez performant et surement pas dans des applications d'électrodes épaisses. Les phosphates de fer lithiés sont déjà utilisés depuis quelques années dans certains accumulateurs commerciaux d'outillages portatifs. Malgré leurs atouts, ces phosphates de fer ne permettent pas encore d'atteindre des densités d'énergie élevées. Les performances annoncées font état de 100 à 120 Wh/kg à l'échelle de la cellule Li-ion (c'est-à-dire un accumulateur dans lequel l'ion lithium de la cathode s'échange de manière réversible entre la cathode et l'anode, via l'utilisation d'un électrolyte comprenant un sel de lithium) (électrode positive à base de LiFePO₄, et électrode négative à base de carbone), contre 160 à 180 Wh/kg pour une cellule conventionnelle (c'est-à-dire un accumulateur unique au lithium-oxyde de cobalt/carbone).

Il existe donc un besoin de produire un matériau d'électrode composite de phosphate de fer lithié et de carbone permettant d'atteindre une densité d'énergie pratique supérieure à 140 Wh/kg au niveau de la cellule Li-ion, à partir duquel des électrodes épaisses sont façonnables et ce, à l'échelle industrielle au contraire de procédés de fabrication à l'échelle de laboratoire.

La présente invention se rapporte donc à un procédé de production d'un matériau d'électrode composite de phosphate de fer lithié et de carbone comprenant les étapes de
- formation d'un mélange de précurseurs contenant au moins du phosphate de lithium, du phosphate de fer (II) et d'une matière contenant du carbone, sous atmosphère inerte,
- un broyage dudit mélange de précurseurs obtenu et
- une calcination dudit mélange broyé pendant lequel se produisent la pyrolyse de la matière contenant du carbone et la formation de cristaux de phosphate de fer lithié.

Un procédé de fabrication du même type est par exemple connu du document EP 1 195 827. Ce document enseigne un ajout de carbone, par exemple du noir de carbone ou du graphite) à n'importe quelle étape avant la calcination et d'effectuer une étape de compression entre le broyage et la calcination.

En outre, ce document enseigne un temps de broyage d'environ 10 heures, en fonction des différents matériaux de cathode fabriqués. Toutefois, une telle durée de broyage ne permet pas une production industrielle du matériau d'électrode, tout au plus une fabrication à l'échelle de laboratoire, en particulier au vu de la conjoncture actuelle qui tend à réduire les consommations d'énergie et les émissions de pollutions. Il existe donc un besoin de mettre au point un procédé de production d'un matériau d'électrode moins énergivore et donc applicable industriellement tout en permettant d'atteindre des performances électrochimiques satisfaisantes telles que celle d'un matériau d'électrode composite de phosphate de fer lithié et de carbone permettant d'atteindre une densité d'énergie pratique supérieure à 140 Wh/kg au niveau de la cellule Li-ion.

Un autre document qui divulgue les étapes mentionnées ci-dessus est le document WO2009/117871. Ce document divulgue une étape de frittage des précurseurs à base de lithium, fer, phosphate et carbone et ensuite un mélange d'une matière contenant du carbone avec le premier produit issu du frittage. Ultérieurement, une deuxième étape de frittage à une deuxième température est effectuée sur le mélange pour obtenir la matière souhaitée. De cette façon, le carbone qui peut agir comme réducteur pendant le premier frittage est uniformément réparti parmi les précurseurs chimiques avant le premier frittage. La deuxième addition de carbone permet d'assurer un revêtement de la surface des cristaux de phosphate de fer lithié ainsi formés. Ce revêtement carboné procure une surface conductrice et contribue à limiter la taille des cristaux de phosphate de fer lithié et favorise l'homogénéité souhaitée de la taille du cristal. Ce document enseigne en outre, entre les étapes de frittage, d'effectuer de préférence une étape de broyage et donne quantité de broyages différents possibles allant du broyage à la main au broyage à billes et des vitesses de rotation aussi diverses que de 30 à 400 tr/min. Dans les exemples, une étape de broyage des précurseurs est effectuée dans laquelle un broyeur à billes conventionnel est utilisé pendant environ 10-12 heures pour obtenir une taille de particules comprise entre 1 et 3 µm.

Ce type de durée de broyage est, comme mentionné ci-dessus, non adéquat pour une échelle industrielle de fabrication d'un matériau de cathode présentant une densité d'énergie supérieure à 140 Wh/kg, et ceci également lorsque des électrodes épaisses sont produites.

Un autre document est le document EP1193783 qui produit un phosphate de fer lithié présentant une taille de particules inférieure à 3,1 µm dans le but d'obtenir une surface spécifique BET qui est supérieure à 10,3 m²/g. Ceci permet, selon l'enseignement de ce document d'améliorer la surface de contact entre le matériau de cathode produit et le matériau électriquement conducteur pour améliorer la conductivité électronique du matériau de cathode lui-même. Malheureusement, selon ce document, la fabrication de phosphate de fer lithié est effectuée à l'échelle de laboratoire et le produit n'a été testé que dans des piles boutons.

Il existe donc toujours un besoin de pouvoir produire un phosphate de fer lithié à l'échelle industrielle et qui pourra fournir une densité d'énergie supérieure à 140 Wh/kg, même sous forme d'électrodes épaisses.

Pour résoudre ce problème et donc obtenir un matériau d'électrode composite de phosphate de fer lithié et de carbone permettant d'atteindre une densité d'énergie supérieure à 140 Wh/kg, possible à fabriquer au niveau industriel, c'est-à-dire dont le procédé de production permet une certaine rentabilité et qui est de préférence en continu, il est nécessaire d'optimiser le procédé de production du matériau composite pour ensuite pouvoir optimiser les étapes de fabrication des électrodes et des cellules électrochimiques.

A l'issue du procédé de production, il est opportun d'obtenir un matériau composite d'électrode dont les caractéristiques physico-chimiques permettront la mise en forme des électrodes, en particulier d'électrodes épaisses.

En effet, comme mentionné ci-dessus, en plus d'être suffisamment rentable et donc faisable industriellement, le procédé selon l'invention doit permettre de réaliser des électrodes épaisses présentant une capacité surfacique élevée (en mAh/cm²). A titre d'exemple, on peut déduire des exemples décrits dans le brevet EP 1 195 827, une capacité surfacique comprise entre 0,5 et 1 mAh/cm², ce qui est insuffisant pour produire à partir de ce matériau composite d'électrode des cellules Li-ion de grande densité d'énergie. Cette dernière dicte ensuite les performances intrinsèques de l'accumulateur; en particulier la densité d'énergie. A la différence de LiCoO₂, le composé LiFePO₄ n'est, par exemple, généralement pas adapté à la réalisation de telles électrodes.

Par les termes phosphate de fer lithié ou LiFePO₄, on entend d'une façon générale tout composé à base de phosphate de fer lithié, seul ou en mélange, ou encore substitué partiellement comme les phosphates de fer lithiés dopés. Un exemple au sens de l'invention d'un tel phosphate de fer lithié dopé est le phosphate de fer lithié dopé au bore.

Il existe donc un besoin d'obtenir un matériau d'électrode composite permettant de réaliser des électrodes épaisses présentant une capacité surfacique élevée, pour fournir à la cellule électrochimique une densité d'énergie pratique élevée et dont le procédé de fabrication est faisable industriellement.

A cette fin, le procédé selon l'invention est caractérisé en ce que ledit broyage est un nanobroyage industriel à billes à haute énergie pendant une durée prédéterminée suffisante pour conférer au mélange de précurseurs une énergie d'activation mécanique suffisante pour obtenir des agrégats mixtes micrométriques de particules nanométriques .

Par les termes « nanobroyage à billes à haute énergie », « mécanosynthèse », « synthèse ou activation mécanochimique », « nanobroyage », nanostructuration ou encore « mechanical alloying », qui pourront être utilisés dans la présente description de manière interchangeable, on entend tout procédé dans lequel l'agitation du milieu de broyage (généralement des billes) produit des chocs conduisant non seulement à la fracturation des grains de poudre à l'échelle nanométrique (obtention de particules nanométriques) mais également à leur ressoudure à l'échelle atomique par un mécanisme de type microforgeage ou soudage diffusion (formation d'agrégats mixtes micrométriques de particules nanométriques). Le nanobroyage selon l'invention doit donc être performant pour qu'il soit réellement à haute énergie, c'est-à-dire exempt de colmatage pour que le nanobroyage transmette l'énergie conférée aux billes à la matière à broyer et non que les chocs soient inefficaces à cause du colmatage.

De plus, selon l'invention, le nanobroyage est une étape de nanobroyage industrielle, c'est-à-dire permettant de produire le matériau de cathode selon l'invention à l'échelle industrielle, de manière rentable, c'est-à-dire qui permet de produire un débit de matière supérieur à 1kg/h, et de préférence d'au moins 3 kg/h, voire d'au moins 5 kg/h, voire d'au moins 10 kg/h et de la manière la plus préférentielle d'au moins 15 kg/h.

Lors du broyage à billes à haute énergie, le broyage confère donc à la poudre une énergie importante par unité de temps qui peut être estimée à plus de 125 kJ/h, de préférence de plus de 150 kJ/h, de manière plus préférentielle de plus de 175kJ/h, plus particulièrement d'environ 200 kJ/h, par kg de poudre à broyer afin de réaliser la formation d'agrégats mixtes micrométriques de particules nanométriques généralement en moins de deux heures tout en maintenant une capacité spécifique du matériau supérieure à 150 mAh/g à la fin du procédé.

Le temps de broyage moyen du mélange de précurseurs selon l'invention est donc fonction de la vitesse relative des billes et de la quantité de matière. En l'absence de colmatage, si l'on considère une vitesse relative maximale des billes de 8 m/s, il faudra compter environ 30 minutes de broyage, une vitesse relative maximale proche de 6 m/s demandera un temps de broyage d'environ 45 minutes tandis qu'une vitesse relative des billes d'environ 11 à 14 m/s ne demandera qu'un temps de broyage de 10 à 20 minutes. Les temps de broyage mentionnés ici ne sont que les temps donnés pour obtenir l'activation mécanochimique au-delà desquels la proportion d'énergie consommée par le broyage n'apporte plus de caractéristique complémentaire au produit broyé.

Bien entendu, rien n'empêche de prolonger le broyage plus longtemps au-delà des valeurs mentionnées ci-dessus, si l'optimum énergétique n'est pas crucial. Dans certains cas, une vitesse relative des billes comprise entre 2 et 3 m/s pendant une durée de 2 à 4 heures s'avère également être un compromis acceptable pour la consommation énergétique de cette étape de nanobroyage, pour autant que l'énergie apportée par unité de temps à la matière à broyer soit suffisante pour que le broyage puisse être qualifié de broyage à haute énergie et pour conférer de cette façon à la poudre une énergie suffisante pour la fractionner en nanoparticules et la ressouder en agrégats micrométriques.

On appellera donc au sens de l'invention « durée de broyage prédéterminée suffisante pour conférer au mélange de précurseurs une énergie d'activation mécanique suffisante pour obtenir des agrégats mixtes micrométriques de particules nanométriques », le temps suffisant pour obtenir l'état broyé désiré à savoir les agrégats mixtes micrométriques de particules nanométriques. Cette durée prédéterminée est donc une fonction du type de broyeur (vitesse maximale des billes, géométrie du broyeur, efficacité de transfert d'énergie à la matière, milieu de broyage utilisé, etc.). En tout état de cause, la durée de broyage sera généralement comprise entre 5 minutes et 5 heures en fonction des broyeurs utilisés.

Le nanobroyage industriel à haute énergie selon l'invention est donc avantageusement effectué dans un broyeur à haute énergie choisi dans le groupe des broyeurs à billes ATR ou PULVIS, des broyeurs par mécano-fusion NOBILTA, ou AMS, commercialisés par la société Hosokawa Alpine, le broyeur Attritor commercialisé par la société Union Process, le broyeur LME ou LMZ commercialisé par la société Netzsch et, le broyeur Simoloyer ® commercialisé par la société Zoz Gmbh.

Par les termes « vitesse relative des billes », on entend, au sens de l'invention la vitesse linéaire des billes par rapport à un référentiel lié à l'enceinte de broyage, cette dernière pouvant être fixe ou en mouvement selon le type de broyeur.

Par les termes "agrégats mixtes micrométriques de particules nanométriques", on entend, au sens de l'invention des agrégats dont la taille moyenne (D50) mesurée par granulométrie laser dans du méthanol est comprise entre 0,5 et 60 µm, de préférence entre 1 et 45 µm et de manière plus préférentielle de 2 à 15 µm, dont la composition chimique à l'échelle de l'agrégat est identique d'un agrégat à l'autre, et constitués d'un assemblage soudé de particules de tailles nanométriques de l'ensemble des poudres du mélange de précurseurs à broyer lorsque les termes sont utilisés pour décrire la morphologie du produit avant l'étape de calcination, ou constitués d'un assemblage soudé de particules de tailles nanométriques du matériau composite d'électrode lorsque les termes sont utilisés pour décrire la morphologie du produit après l'étape de calcination.

Par les termes "particules nanométriques", on entend, au sens de l'invention des particules dont la taille maximale mesurée par microscopie en transmission est inférieure à 50 nm.

Un tel broyage est par exemple obtenu par un dispositif tel que décrit dans le brevet US 5,464,163. De cette façon, le broyage confère une énergie de broyage due aux collisions des particules et permet d'obtenir des particules nanométriques plus fines et essentiellement plus rapidement que dans les étapes de broyage conventionnel. Ces collisions permettent également de ressouder les particules nanométriques entre elles pour former des agrégats dont la taille dépend de l'équilibre statistique entre la fréquence d'occurrence des chocs « fracturants » et celle des chocs « ressoudants ».

De cette façon, les agrégats sont des agencements de poudre broyée particulièrement optimaux pour obtenir une mise en forme préalable qui permettra dans une étape ultérieure une fabrication d'électrodes plus épaisses que celles de l'état de la technique. De cette façon, puisque les deux facteurs (densité de poudre tapée et épaisseur) atteignent des valeurs optimales, la capacité surfacique qui dépend linéairement de leur produit est forcément également optimale et en tout cas bien supérieure à celles décrites dans les diverses publications sur le sujet.

En effet, la capacité surfacique (qui est le résultat du produit de la capacité spécifique en mAh/g par la densité pressée en g/cm³ et l'épaisseur de l'électrode en cm) est considérée satisfaisante lorsque la densité pressée en g/cm³ et l'épaisseur d'électrode atteignent toutes deux des optima. La capacité surfacique sera considérée comme satisfaisante lorsqu'elle est supérieure à 2 mAh/cm², de préférence supérieure à 3 mAh/cm².

Ces grains micrométriques agrégés de particules nanométriques permettent donc d'obtenir des densités plus élevées dans le matériau composite selon l'invention qui permet donc d'atteindre de meilleures performances tant au niveau de l'électrode qu'au niveau de la cellule et sont en outre produites par un procédé bien moins énergivore, qui demande des temps de broyage réduits (par exemple de 10 heures à moins de quatre heures, de préférence de moins de deux heures) car le rendement énergétique pour un broyeur permettant le nanobroyage est supérieur à celui des broyeurs conventionnels ne permettant pas le nanobroyage dans des conditions normales d'utilisation (temps raisonnables de broyage, consommation énergétique).

Le rendement énergétique de l'étape de nanobroyage peut être une fonction de la géométrie du broyeur, de la taille des billes, de la matière des billes, du milieu de broyage, de la vitesse relative maximale du milieu de broyage, ... Par exemple, si l'on tient compte du paramètre « vitesse relative maximale du milieu de broyage », il est avantageux que cette « vitesse relative » élevée permette notamment de générer des chocs d'énergie suffisante pour éviter à la poudre de former des dépôts (colmatage) sur les éléments du milieu de broyage (parois de l'enceinte de broyage, billes et le cas échéant bras ou pales d'agitation). La constitution de tels dépôts réduit considérablement l'efficacité du broyage pour les raisons suivantes :
- la quantité de poudre libre diminuant, le nombre de chocs bille/bille ou bille/paroi sans grains de poudre augmente, ce qui accroît la part de dissipation thermique générée par les chocs
- les poudres piégées dans de tels dépôts reçoivent moins d'énergie mécanique que les poudres restées libres car les dépôts peuvent dissiper une partie de l'énergie des chocs (par amortissement ou transmission aux substrats)
- les poudres piégées dans de tels dépôts sont difficilement récupérables et nécessitent généralement une intervention manuelle, ce qui réduit considérablement le temps d'utilisation effectif du broyeur ou à défaut limite la quantité de poudre récupérée.

Si l'étape de nanobroyage est combinée à d'autres techniques permettant d'éliminer le colmatage du broyeur, dans ce cas, par exemple, il est envisageable selon l'invention d'utiliser des nanobroyeurs à haute énergie à des vitesses relatives maximales du milieu de broyage plus faibles comme de 2 à 4 m/s, pour autant que l'énergie transmise à la poudre pendant l'étape de broyage soit suffisante pour conférer des chocs fracturants et des chocs ressoudants, pour obtenir des agrégats mixtes micrométriques de particules nanométriques du matériau de cathode, le tout en une durée de broyage exploitable industriellement.

Dans une forme de réalisation préférentielle du procédé selon l'invention, ladite étape de broyage est réalisée pendant moins d'une demi-heure et de préférence pendant environ 15 minutes, ce qui permet d'améliorer encore l'impact environnemental et énergivore du procédé selon l'invention.

Dans certaines formes de réalisations selon l'invention, les grains micrométriques de particules nanométriques présentent une taille moyenne (D50) mesurée par granulométrie laser dans du méthanol comprise entre 30 et 60 µm. Dans ce cas, après la calcination du produit, une étape complémentaire de broyage conventionnel est réalisée, de manière à rompre les agglomérats de grains micrométriques de particules nanométriques. Ces agglomérats ne constituent pas une matière difficile à broyer, un simple broyage comme un broyage à impact couplé à une classification est suffisant.

Avantageusement, ladite étape de calcination présente une durée de moins de 2 heures, de préférence de moins d'une heure et de manière plus préférentielle de moins d'une demi-heure.

De ceci, il ressort qu'en plus de permettre une étape de broyage sensiblement raccourcie, plus rentable d'un point de vue rendement énergétique, l'effet obtenu sur la finesse des grains du matériau d'électrode avant calcination permet également de réduire drastiquement la durée de l'étape de calcination aboutissant de cette façon à un procédé de fabrication complet encore moins polluant et encore moins énergivore. Rappelons à toutes fins utiles que nombre de procédés de calcination présentent des durées sensiblement égales à une période de temps comprise entre 5 et 10 heures.

Dans une forme de réalisation préférentielle du procédé selon l'invention, ledit mélange de précurseurs contient aussi une source de bore telle que du phosphate de bore, du carbure de bore ou leur mélange et ledit matériau composite de phosphate de fer lithié et de carbone est un matériau composite de phosphate de fer lithié dopé au bore et de carbone.

Dans ce cas, la formule du produit obtenu est de préférence LiFe_{β}B_{γ}PO₄/C avec 0 < γ/β ≤ 0,1 et γ + β <1

Le bore est alors inséré dans la structure cristalline du LiFePO₄ en substitution d'une partie des atomes de fer, créant de ce fait quelques lacunes cationiques au sein du matériau (γ + β < 1). Cette modification structurale du LiFePO₄ entraînerait une amélioration remarquable de la conductivité électrique du matériau.

Dans une forme de réalisation avantageuse selon l'invention, le procédé comprend avant la formation dudit mélange de précurseurs, une étape de synthèse du phosphate de lithium par neutralisation de l'hydroxyde de lithium par de l'acide phosphorique, en milieu aqueux et à température ambiante, selon la réaction (I).

(I) 3LiOH.H₂O + H₃PO₄ → Li₃PO₄ + 6H₂O.

Par exemple, et de préférence, l'hydroxyde de lithium est obtenu par dissolution de l'hydroxyde de lithium dans l'eau, alors que l'acide phosphorique est ajouté petit à petit, à vitesse contrôlée et sous agitation. Le phosphate de lithium ainsi obtenu est alors décanté, filtré, lavé et ensuite séché.

A titre d'exemple, dans le procédé selon l'invention, ledit phosphate de fer (II) est synthétisé à température ambiante par réaction en milieu aqueux de sulfate de fer (II) avec du DSP (phosphate di-sodique), selon la réaction (II).

(II) 2H₃PO₄ + 6NaOH + 3FeSO₄.7H₂O → Fe₃(PO₄)₂.8H₂O + 3Na₂SO₄ + 19H₂O.

Comme on peut le constater, le phosphate di-sodique est par exemple préparé *in situ* par neutralisation partielle de l'acide phosphorique par la quantité appropriée de soude caustique et une solution aqueuse de sulfate de fer (II) est ajoutée à vitesse contrôlée et sous agitation. De préférence, le pH est ajusté en continu par ajout de soude caustique. Dans une variante selon l'invention, la soude caustique est remplacée par une autre base conventionnelle. De manière plus préférentielle, le milieu réactionnel est maintenu sous agitation après addition des réactifs. Le précipité de phosphate de fer (II) ainsi obtenu est décanté, filtré, lavé et séché sous vide et la température du produit est maintenue en dessous de 60°C.

De manière particulièrement avantageuse, le procédé selon l'invention comprend un dégazage de l'eau par barbotage d'argon et un inertage de l'équipement utilisé afin d'éviter l'oxydation du fer (II) en fer (III). Par exemple, les cuves de réaction, le filtre sécheur pour sécher le précipité formé sont également placés sous atmosphère inerte à l'argon ou éventuellement à l'azote, ou encore éventuellement au dioxyde de carbone

De manière préférentielle, le broyage s'effectue également en atmosphère inerte (argon, CO₂ ou azote) ou sous vide statique (< 0,1 mbar) afin de conserver le phosphate de fer dans un état majoritairement réduit (% Fe (II) > % Fe (III)) en limitant son oxydation qui est favorisée par la chaleur générée au cours de l'opération de broyage (dissipation thermique des chocs, réabsorption de l'eau évaporée des précurseurs, ...) par la présence de vapeur d'eau issue de l'évaporation de l'eau contenue dans les précurseurs. Le fait de conserver le phosphate de fer dans un état majoritairement réduit à l'issue du broyage permet de limiter la quantité de précurseur de carbone qui sera consommée comme agent réducteur lors de la calcination et donc de limiter la quantité de précurseur de carbone à ajouter au mélange à broyer, et évite, en cas de quantité insuffisante de précurseur de carbone, d'obtenir des composés impurs dans le matériau composite final, qui auraient des conséquences négatives sur les performances électrochimiques du matériau composite.

Avantageusement, dans le procédé selon l'invention, la calcination est effectuée sous atmosphère inerte d'argon afin d'éviter le plus possible l'oxydation du phosphate de fer (II) en début de calcination et de permettre l'obtention de conditions réductrices lors de la décomposition thermique du précurseur de carbone (par dégagement de CO et de H₂). La calcination a lieu de manière avantageuse à une température comprise entre 550°C et 800 °C et avantageusement d'environ 600°C pendant de 10 à 20 minutes et de préférence pendant 15 minutes. En tout état de cause, la température de calcination doit être inférieure à la température de fusion de l'un des précurseurs.

De manière préférentielle, ladite matière contenant du carbone est de la cellulose, ce qui permet, de par la nature de la source de carbone ajoutée lors de la synthèse, de limiter la croissance cristalline des grains de LiFe_{β}B_{γ}PO₄ et apporte une certaine porosité au matériau. En effet, la décomposition de la cellulose durant l'étape de calcination, de préférence très courte permet une répartition du carbone très homogène dans le matériau d'électrode composite ainsi obtenu et améliore de cette façon la conductivité et donc les performances électrochimiques du matériau composite d'électrode selon l'invention.

D'autres formes de réalisation du procédé selon l'invention sont mentionnées dans les revendications annexées.

La présente invention se rapporte également à un matériau d'électrode présentant la formule suivante Li_{α}Fe_{β}B_{γ}PO₄/C dans laquelle 0,85 ≤ α ≤ 1,08, 0 ≤ γ/β ≤ 0,1 et γ + β ≤1. Ce matériau d'électrode est caractérisé en ce qu'il se présente sous la forme d'agrégats microforgés mixtes micrométriques de particules nanométriques, lesdites particules nanométriques présentant une taille maximale mesurée par microscopie en transmission inférieure à 50 nm et lesdits agrégats mixtes micrométriques présentant une taille moyenne (D50) mesurée par granulométrie laser dans du méthanol comprise entre 0,5 et 60 µm, de préférence entre 1 et 45 µm et de manière plus préférentielle de 2 à 15 µm, plus préférentiellement de 3 à 8 µm.

Cette caractéristique du matériau d'électrode selon l'invention, par exemple obtenu par le procédé tel que mentionné ci-dessus, permet d'obtenir des électrodes particulièrement exploitables au niveau industriel puisqu'elles peuvent être produites de manière rentable. En outre, elle permet de former des électrodes épaisses ou minces qui ont des caractéristiques physico-chimiques optimales en particulier une capacité spécifique pratique qui promet un bel avenir à ce matériau. Plus particulièrement, le matériau d'électrode selon l'invention permet donc de fournir une capacité spécifique pratique d'électrode comprise entre 150 et 170 mAh/g, de préférence entre 155 et 170 mAh/g et généralement comprise entre 155 et 165 mAh/g, pour une capacité surfacique inférieure à 2 mAh/cm² et de fournir une capacité spécifique pratique d'électrode supérieure à 150 mAh/g pour une capacité surfacique comprise entre 2 et 4 mAh/cm².

La présente invention a donc permis d'obtenir à partir d'un procédé de fabrication enfin applicable industriellement un matériau composite d'électrode susceptible de fournir à l'électrode formée à partir de celui-ci une capacité surfacique élevée, grâce à la morphologie obtenue par le broyage à haute énergie, en particulier par la formation d'agrégats micrométriques de particules nanométriques. En effet, comme mentionné précédemment, pour obtenir une capacité surfacique élevée pour une électrode, celle-ci étant proportionnelle à l'épaisseur de l'électrode, il est important que cette valeur tende vers un maximum, ce qui est le cas avec le broyage avantageux selon l'invention qui est en outre moins énergivore que les procédés de broyage conventionnels.

Il a en effet été découvert de manière surprenante que l'étape de broyage selon l'invention, de durée particulièrement courte (combinée à l'étape de calcination éventuellement aussi de durée très courte) permet d'obtenir, grâce la structure micrométrique des agrégats mixtes de particules nanométriques, une capacité spécifique pratique élevée tout en permettant d'atteindre un coût de production réduit et un procédé de production peu polluant et peu énergivore.

Avantageusement, le matériau d'électrode selon l'invention présente la formule suivante LiFe_{β}B_{γ}PO₄/C dans laquelle γ + β <1, en particulier LiFe_{0,95}B_{0,033}PO₄/C. De cette façon, le bore est inséré dans la structure cristalline du LiFePO₄ en substitution d'une partie des atomes de fer, créant de ce fait quelques lacunes cationiques au sein du matériau (γ + β < 1). Cette modification structurale du LiFePO₄ entraîneraît une amélioration remarquable de la conductivité électrique du matériau.

Le matériau d'électrode selon l'invention présente une densité DRX d'environ 3,6 g/cm³ et une densité mesurée par pycnométrie hélium d'environ 3,4 g/cm³

Dans une forme de réalisation avantageuse du matériau d'électrode selon l'invention, la teneur en carbone résiduel est strictement comprise entre 1 et 3% en poids par rapport au poids total du matériau d'électrode.

La présente invention a donc en outre permis d'obtenir un matériau d'électrode présentant une teneur en carbone réduite tout en permettant d'atteindre des performances électrochimiques particulièrement avantageuses, semblables à celles obtenues par exemple dans l'art antérieur avec des teneurs en carbone plus élevées, entre autres, de par l'utilisation d'un temps de calcination réduit qui demande forcément une utilisation de carbone en tant qu'inhibiteur de croissance cristalline moindre. En effet, le carbone est utilisé à deux fins dans une calcination. Tout d'abord, il sert d'inhibiteur de croissance cristalline et ensuite, il permet d'améliorer la capacité spécifique du matériau d'électrode. La réduction du temps de calcination avantageusement obtenue suivant le procédé selon l'invention réduit également la teneur en carbone nécessaire pour obtenir la capacité spécifique recherchée et permet donc d'obtenir une quantité supérieure de matière active par rapport aux procédés où la teneur en carbone est plus élevée. Dès lors, sans diminuer la teneur en matière active, la conduction électronique est améliorée.

De plus, par la teneur réduite en carbone de 1 à 3 % en poids, par rapport au poids total du matériau d'électrode, les grains de structure cristalline LiFe_{β}B_{γ}PO₄ sont enrobés de manière discontinue par du carbone et une partie du carbone peut également être dispersée au sein de la poudre principale.

Le matériau d'électrode selon l'invention présente à l'état final (après broyage et calcination) une densité tapée de 0,8 à 1,5 g/cm³ et de préférence environ 1,1 g/cm³.

Par les termes "densité tapée", au sens de la présente invention, on entend la densité apparente d'une poudre mesurée selon les normes ASTM B527et D4164.

Avantageusement, le matériau d'électrode selon l'invention présente une surface spécifique mesurée selon la méthode BET qui vaut de 12 à 24 m²/g, de préférence de 16 à 22 m²/g, en particulier de 18 à 20 m²/g.

De préférence, le matériau d'électrode selon l'invention présente une taille moyenne (D50) d'agrégats mesurée par granulométrie laser dans du méthanol comprise entre 3 et 8 µm.

D'autres formes de réalisation du matériau d'électrode sont décrites dans les revendications annexées.

L'invention se rapporte également à une électrode de matériau composite de phosphate de fer lithié et de carbone présentant, à une capacité surfacique inférieure à 2 mAh/cm², une capacité spécifique pratique supérieure à 150 mAh/g, de préférence supérieure à 155 mAh/g et inférieure à 170 mAh/g.

L'invention se rapporte également à une électrode de matériau composite de phosphate de fer lithié et de carbone présentant, à une capacité surfacique comprise entre 2 et 4 mAh/cm², et de préférence de l'ordre de 3 mAh/cm², une capacité spécifique pratique supérieure à 150 mAh/g et inférieure à 170 mAh/g.

Comme on peut le constater, l'électrode présente une capacité surfacique particulièrement élevée, que ce soit en électrode mince (ayant une capacité surfacique inférieure à 2 mAh/cm²) ou en électrode épaisse (ayant une capacité surfacique comprise entre 2 et 4 mAh/cm²), en particulier à cause de la densité élevée de la poudre composite obtenue à l'issue du broyage et des agrégats mixtes micrométriques de particules nanométriques, également obtenus à l'issue du broyage qui permettent d'atteindre des épaisseurs d'électrodes élevées. En conséquence de ceci, puisque la capacité spécifique est une fonction du produit de la densité de la poudre et de l'épaisseur des électrodes, il ressort clairement qu'obtenir des valeurs maximales pour ces deux grandeurs permet d'obtenir un optimum de capacité surfacique spécifique pour l'électrode selon l'invention.

Dans une autre forme de réalisation, l'électrode comprend en outre un ou plusieurs additifs conducteurs électroniques et un ou plusieurs liants organiques.

Avantageusement, ledit un ou plusieurs additifs conducteurs électroniques est choisi dans le groupe constitué des fibres de carbone, du noir de carbone, de nanotubes de carbone ou analogues.

De préférence, ledit matériau d'électrode est présent en une quantité allant de 80 à 92% en poids par rapport au poids total de l'électrode.

Avantageusement, ledit un ou plusieurs additifs conducteurs électroniques est présent en une quantité allant de 4 à 14 % en poids par rapport au poids total de l'électrode, de façon à assurer un compromis entre conductivité (de manière à assurer la percolation électronique) et densité de l'électrode : la présence de carbone diminue la densité, mais favorise l'obtention d'une bonne capacité pratique via l'amélioration de la conductivité. Dans une forme de réalisation préférentielle, ledit un ou plusieurs liants organiques est présent en une quantité allant de 4 à 10 % en poids par rapport au poids total de l'électrode.

De façon privilégiée, la porosité de l'électrode est comprise entre 50 et 25 %.

D'autres formes de réalisation de l'électrode selon l'invention sont mentionnées dans les revendications annexées.

La présente invention se rapporte également à une cellule électrochimique Li-ion comprenant une électrode selon l'invention ainsi qu'éventuellement, une électrode négative de carbone et un électrolyte conducteur des ions Li⁺.

La cellule électrochimique selon l'invention présente en outre avantageusement une densité d'énergie comprise entre 160 à 180 Wh/kg.

D'autres formes de réalisation de la cellule électrochimique selon l'invention sont indiquées dans les revendications annexées.

D'autres caractéristiques, détails et avantages de l'invention ressortiront de la description donnée ci-après, à titre non limitatif et en faisant référence aux dessins et aux exemples annexés.

La figure 1 est un graphique représentant un diagramme de diffraction des rayons X (λ_{Cukα}) d'une poudre de LiFe_{0,95}B_{0,033}PO₄/C contenant 2,5 % en poids de carbone selon l'invention (A). Les symboles verticaux (B) correspondent aux positions de Bragg calculées pour le groupe d'espace Pnma et pour les paramètres de maille a = 10,326(3) Å, b = 6,006(2) Å et c = 4,695(2) Å. Les courbes (D) et (C) correspondent respectivement aux diagrammes simulés et à la différence entres les diagrammes expérimentaux et simulés.

La figure 2 est un graphique représentant la répartition en taille des grains d'une poudre de LiFe_{0,95}B_{0,033}PO₄/C contenant 2,5 % en poids de carbone selon l'invention. L'analyse granulométrique a été réalisée par diffraction laser. La courbe (A) représente la fraction volumique pour chaque intervalle de taille de grains considéré. La courbe (B) représente la fraction volumique cumulée, et se lit de la gauche vers la droite.

La figure 3 illustre un cliché d'une poudre de LiFe_{0,95}B_{0,033}PO₄/C contenant 2,5% en poids de carbone selon l'invention obtenu par microscopie électronique à balayage (MEB) en mode électrons rétrodiffusés.

La figure 4 est un graphique représentant une courbe de charge/décharge en mode galvanostatique (régime de C/5 ; 20°C) d'une poudre de LiFe_{0,95}B_{0,033}PO₄/C contenant 2,5 % en poids de carbone selon l'invention. La capacité théorique du couple LiFePO₄/FePO₄ est de 170 mAh/g. Le carbone présent dans le composite LiFePO₄/C abaisse cette valeur de quelques milli-ampères-heures par gramme.

La figure 5 représente l'évolution de la capacité spécifique d'une poudre de LiFe_{0,95}B_{0,033}PO4/C contenant 2,5 % en poids de carbone selon l'invention en fonction du régime de décharge imposé.

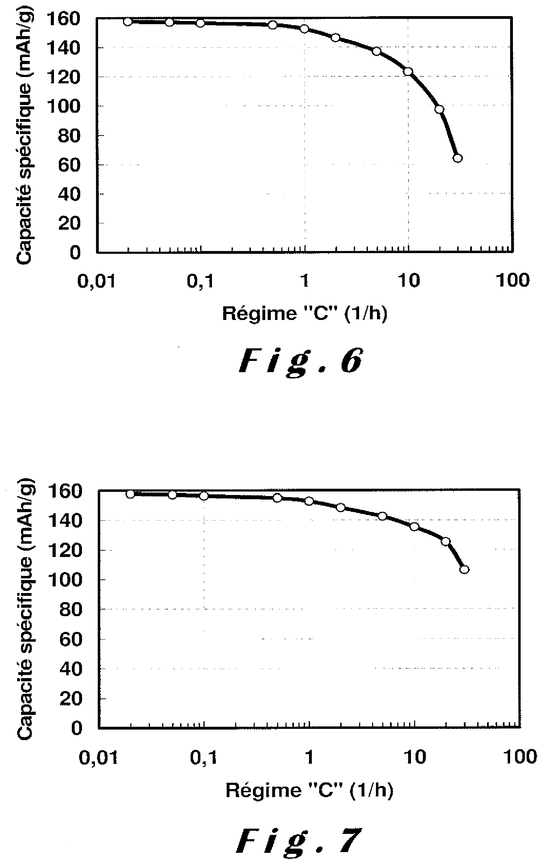

La figure 6 représente l'évolution de la capacité spécifique d'une poudre de LiFe_{0,985}B_{0,010}PO4/C contenant 2,5 % en poids de carbone obtenu selon l'exemple 5 selon l'invention en fonction du régime de décharge imposé.

La figure 7 représente l'évolution de la capacité spécifique d'une poudre de LiFe_{0,985}B_{0,010}PO4/C contenant 2,5 % en poids de carbone obtenue selon une autre variante du procédé selon l'invention en fonction du régime de décharge imposé.

Sur les figures, les éléments identiques ou analogues portent les mêmes références.

Comme mentionné précédemment, la présente invention porte sur un procédé de synthèse d'un composite LiFePO₄/C optimisé permettant l'élaboration d'électrodes épaisses, puis la fabrication d'accumulateurs Li-ion de densité d'énergie supérieure à 140 Wh/kg (140-180 Wh/kg).

Trois étapes majeures sont prévues pour l'obtention de la poudre de matériau d'électrode composite LiFePO₄/C. Cette poudre contient au moins 96 % en masse de LiFePO₄ et moins de 3% en masse de carbone. Le carbone est de préférence issu de la décomposition thermique de la cellulose. Les trois étapes majeures menant au composite LiFePO₄/C sont :
1. la synthèse en solution aqueuse du précurseur Fe₃(PO₄)₂,nH₂O (n∼8),
2. l'activation mécanochimique (nanobroyage ou nanostructuration) permettant le mélange homogène du précurseur Fe₃(PO₄)₂,nH₂O (n∼8) avec Li₃PO₄ et de la cellulose, par un broyage à billes à haute énergie pendant une durée suffisante pour conférer au mélange de précurseurs une énergie d'activation mécanique suffisante pour obtenir des agrégats mixtes micrométriques de particules nanométriques, par exemple.
3. le traitement thermique rapide sous atmosphère contrôlée (inerte).

La capacité théorique du phosphate de fer lithié LiFePO₄ est de 170 mAh/g. Le potentiel de fonctionnement du système LiFePO₄/FePO₄ (3,45 V vs. Li⁺/Li) et la masse volumique (3,5 kg/L) sont plus faibles que pour LiCoO₂/Li_{0,45}CoO₂ (∼ 4,0 V vs. Li⁺/Li et 5,0 kg/L). En revanche, le phosphate de fer présente un coût intrinsèque très faible, une durée de vie en cyclage très importante (c'est-à-dire le nombre de cycle de charge et décharge sans perte significative sachant que 20 % en moins de la capacité initiale est souvent retenue comme étant une valeur de perte significative de capacité) et une composante sécurité nettement supérieure à celle des oxydes lamellaires, particulièrement à l'état chargé (grande réactivité thermique et chimique de LiₓCoO₂; 0≤x≤1). Le procédé de synthèse du matériau composite d'électrode LiFePO₄/C selon la présente invention fait intervenir plusieurs étapes successives dont une étape d'activation mécanochimique particulièrement peu énergivore en comparaison des étapes de broyage/activation mécanochimique conventionnelles. Cette voie de synthèse, optimisée à différentes échelles (laboratoire, prototypage, préindustrielle), permet la préparation de composite LiFePO₄/C adapté à la réalisation d'électrodes épaisses et de cellules Li-ion de grande densité d'énergie massique (140 à 180 Wh/kg) en fournissant un matériau composite d'électrode présentant une densité élevée due à une finesse de grain nanométrique et une formation d'agrégats micrométriques à l'issue du broyage.

La première étape de la synthèse consiste à préparer un précurseur de fer (II) selon la réaction suivante (ou une réaction similaire employant d'autres réactifs) :

2NaOH + 2(NH₄)₂HPO₄ + 3FeSO₄•7H₂O → Fe₃(PO₄)₂•8H₂O + 2(NH₄)₂SO₄ + Na₂SO₄ + 15H₂O

Ce phosphate de fer (II) synthétique, de composition Fe₃(PO₄)₂•8H₂O s'apparente au minéral vivianite. Il est obtenu par précipitation en solution aqueuse selon une réaction en condition stoechiométrique entre les ions Fe²⁺ et les espèces PO₄³⁻ (exemple de réalisation 1)

La deuxième étape de la synthèse fait intervenir un broyage du précurseur de fer ainsi préparé, d'une source de lithium, et éventuellement d'une source de bore et d'une source de carbone, selon la réaction générale suivante :

β.Fe₃(PO₄)₂•8H₂O + 3.γ.BPO₄ + Li₃PO₄ + Cellulose → "mélange homogène des réactifs"

dans laquelle 0 ≤ γ/β ≤ 0,1 et γ + β ≤1

Cette deuxième étape consiste en une activation mécanochimique des différents précurseurs, lesquels formeront après traitement thermique le composite LiFePO₄/carbone désiré (Exemple de réalisation 2).

La troisième étape consiste à effectuer un traitement thermique rapide (de l'ordre de 15 à 30 minutes) des précurseurs sous atmosphère inerte (argon) afin de former le composite LiFePO₄/C. La température est généralement comprise entre 550 et 650°C. La réaction globale mise en jeu est la suivante:

Fe₃(PO₄)₂•8H₂O + Li₃PO₄ + Cellulose → 3LiFePO₄/C (-97/3 en masse) + eau + aldéhydes + autres produits de dégradation de la cellulose

Suite à l'obtention de la poudre désirée, des électrodes à base de LiFePO₄ peuvent être réalisées. Leur élaboration met en oeuvre la dite poudre, un ou plusieurs additifs conducteurs électroniques (fibres de carbones, noir de carbone,...) et un liant organique. Les proportions respectives sont généralement de l'ordre de 80 à 92%, 4 à 14%, et 4 à 10% en masse. Le grammage (ou capacité surfacique) de l'électrode varie, selon l'application, de 2 à 4 mAh/cm², et sa porosité est comprise entre 50 et 25 %.

L'association d'une telle électrode avec une électrode négative de carbone et un électrolyte conducteur des ions Li⁺ permet de réaliser tout type de cellule Li-ion de format (pile bouton, cellule prismatique, cellule cylindrique,...) et de capacité (de quelques milli-Ampères-heures à plusieurs dizaines d'Ampères-heures) souhaités. La densité d'énergie des cellules ainsi assemblées peut atteindre 160 à 180 Wh/kg.

### EXEMPLES.-

### Exemple 1.- formation du phosphate de fer (II)

Deux litres d'eau déionisée sont placés sous agitation magnétique dans un bécher à température ambiante. L'oxygène de l'eau est éliminé par bullage d'argon à travers un fritté. Ce bullage est entamé au moins 15 minutes avant l'introduction des réactifs, et est maintenu tout au long de la synthèse.

Ensuite, 20,01 grammes d'hydroxyde de sodium (NaOH) sont dissous dans ces 2 L d'eau. Lorsque la dissolution est complète, 66,84 grammes d'hydrogénophosphate de diammonium ((NH₄)₂HPO₄) sont ajoutés et dissous dans le milieu réactionnel. Le pH est alors d'environ 11.

211,14 grammes de sulfate de fer (II) finement divisé (FeSO₄.7H₂O) sont ajoutés progressivement à la solution précédente, en maintenant l'agitation. Un précipité gris clair commence à se former. Une fois l'addition de sulfate de fer achevée, le milieu est maintenu sous agitation et bullage d'argon pendant 16h.

Le bullage et l'agitation sont ensuite stoppés afin de laisser le précipité se déposer au fond du bécher. La phase liquide est retirée. Le précipité est ensuite lavé à l'eau distillée et centrifugé: la pâte contenant le précipité est introduite dans des tubes en verre de 100 mL et centrifugée afin de bien séparer le précipité de la phase liquide (50-80 mL d'eau déionisée et désoxygénée sont préalablement introduits dans chaque tube, placé ensuite sous agitation). L'opération est répétée au moins deux fois supplémentaires. Le précipité est rincé une dernière fois, avec de l'acétone. Finalement, le précipité est séché sous vide dynamique (Büchi,....): dans un premier temps, le vide est effectué à température ambiante durant 1 h, puis on chauffe à 60°C pendant 16 h en maintenant le vide. Le produit obtenu a pour composition Fe₃(PO₄)₂,nH₂O (n∼8). Il est de couleur bleue.

### Exemple 2.- Formation dudit matériau composite dopé au bore d'électrode selon l'invention

35 g de Fe₃(PO₄)₂•8H₂O, 8,42 g de phosphate de lithium Li₃PO₄, 0,73 g de phosphate de bore BPO₄ et 3,45 g de cellulose sont introduits dans un bol de broyage en carbure de tungstène ((W-Co)C) de 250 mL, avec 14 billes en carbure de tungstène (20 mm de diamètre). Le bol est entré en boîte à gants sous argon (teneur en O₂ < 2 ppm, H₂O < 10 ppm). Il est fermé (couvercle scellé par du ruban adhésif) afin que l'atmosphère à l'intérieur soit exempte d'oxygène au cours du broyage. A l'extérieur de la boite à gants, le bol est placé sur un broyeur de laboratoire à haute énergie (broyeur planétaire « Pulvérisette 4 », disponible auprès de la société Fritsch GmbH). Le broyage est démarré, la vitesse de rotation est de +400/-400 tours par minute dans le but de réaliser un broyage énergétique. La durée effective du broyage est de 1 h, effectuée en 4 cycles de 15 min espacés par une pause de 5 min pour limiter l'échauffement des bols, dont le refroidissement par air est insuffisant pour broyer sans interruptions. Le bol est ensuite introduit à nouveau en boîte à gants. La poudre broyée est récupérée. Les précurseurs de synthèse sont maintenant activés (mélange intime nanostructuré). La poudre peut être stockée sous argon en attendant d'être traitée thermiquement.

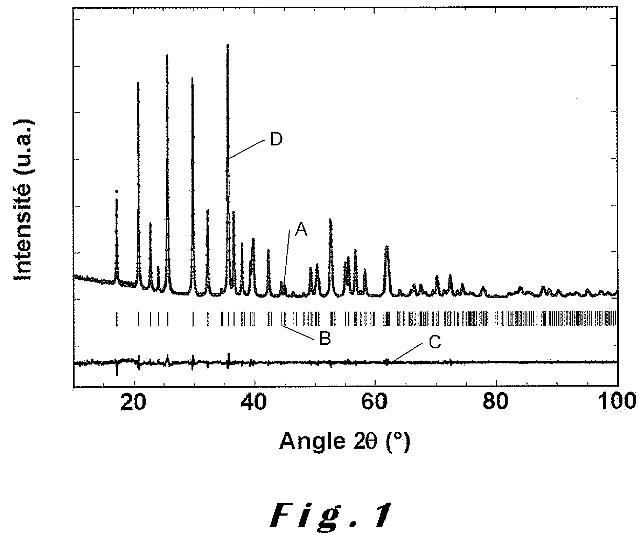

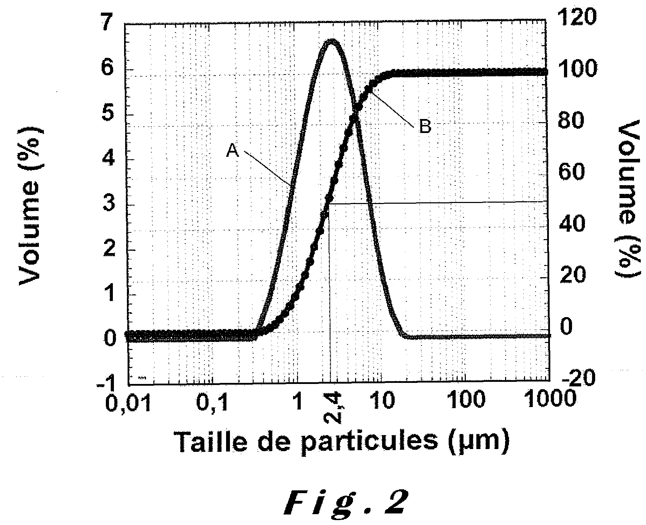

Pour effectuer le traitement thermique de calcination ou pyrolyse, 2 g de la poudre activée mécanochimiquement par le broyage sont introduits dans une nacelle en or, laquelle est placée dans un tube en quartz scellé (volume intérieur de 440 mL - diamètre extérieur de 30 mm, longueur de 500 mm). A l'extérieur de la boîte à gants, le tube en quartz est introduit pendant 15 min dans un four déjà préchauffé à 600°C. Le tube est ensuite sorti du four (∼ trempe à l'air). Ainsi, la poudre atteint très rapidement la température de synthèse est n'y reste qu'un court instant. Une fois refroidie, la poudre est récupérée sous air et stockée après reconditionnement sous argon. Le composite LiFe_{0,95}B_{0,033}PO₄/C est formé. Il contient moins de 3% en poids de carbone par rapport au poids total du matériau composite d'électrode. Comme on peut le voir à la figure 1, la phase LiFe_{0,95}B_{0,033}PO₄/C est parfaitement cristallisée. La taille moyenne des agrégats est de 2,4 µm, comme on peut le voir sur la figure 2.

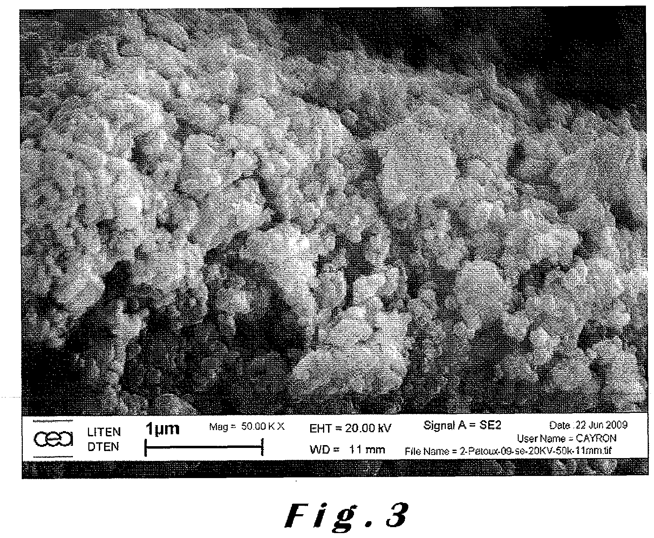

Comme on peut le voir sur la figure 3, ces agrégats sont constitués d'un assemblage micrométrique compact de nanoparticules.

C'est cette forte compacité qui permet d'atteindre la densité requise pour la formation ultérieure de l'électrode.

### Exemple 3.- Formation d'un accumulateur lithium-métal

Un accumulateur lithium-métal de type "pile bouton" est construit avec
- une électrode négative (anode) de lithium (16 mm de diamètre, 130 µm d'épaisseur) déposé sur un disque de nickel servant de collecteur de courant,
- une électrode positive (cathode) constituée d'un disque de 14 mm de diamètre prélevée sur un film composite de 25 µm d'épaisseur comprenant le matériau de l'invention préparé selon l'exemple 2 (80 % en masse), de noir de carbone (10 % en masse) en guise de matériau conducteur et de l'hexafluorure de polyvinylidène (10 % en masse) en guise de liant, le tout étant déposé sur un collecteur de courant en aluminium (feuille de 20 micromètres d'épaisseur),
- un séparateur imbibé d'un l'électrolyte liquide à base du sel LiPF₆ (1mol/L) en solution dans un mélange de carbonate d'éthylène et de carbonate de diméthyle.

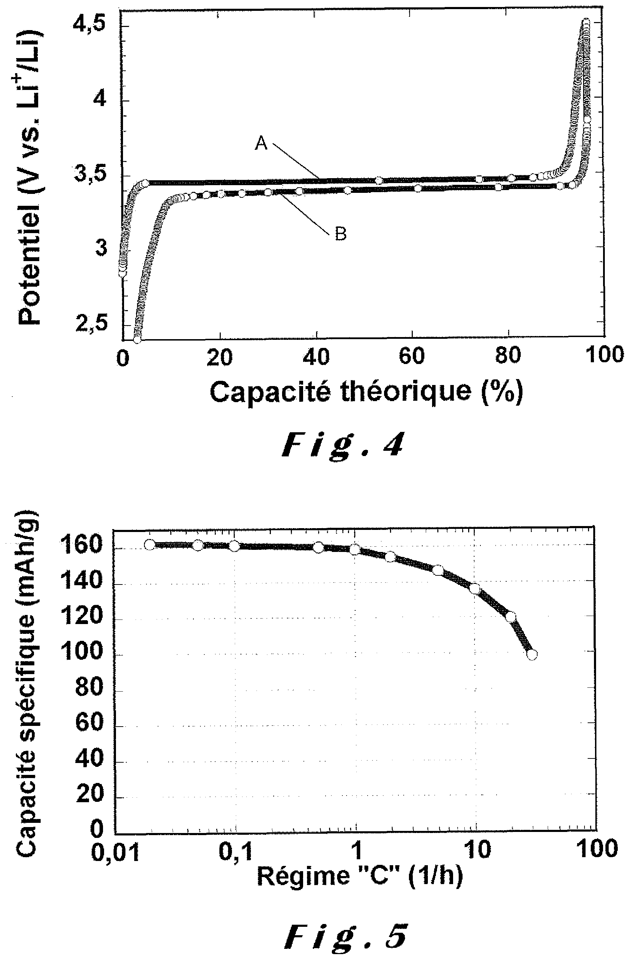

A température ambiante, sous un régime de C/5 (C représentant la charge ou la décharge et 5 le nombre d'heures), ce système délivre une capacité d'environ 160 mAh/g et une tension moyenne de 3,4 V, comme on peut le voir aux figures 4 et 5,.

### Exemple 4.- Formation d'un accumulateur Li-ion

Un accumulateur Li-ion a été construit à partir d'une électrode positive contenant le composite LiFe_{0,95}B_{0,033}PO₄/C de l'invention, d'une électrode négative de carbone et d'un séparateur commercial à base de polypropylène et de polyéthylène imbibé d'électrolyte liquide constitué de LiPF₆ (1 mol.L⁻¹) en solution dans un mélange de carbonate de propylène, de carbonate de diméthyle et de carbonate d'éthylène.

En particulier, l'électrode positive est composée de 90% en masse de LiFe_{0,95}B_{0,033}PO₄/C, 4% en masse de carbone (fibres de carbone et noir de carbone en proportions identiques) et de 6% en masse d'hexafluorure de polyvinylidène en guise de liant. Le mélange est effectué en solution de N-méthylpyrrolidone. L'encre formée est déposée sur un collecteur de courant en aluminium de telle sorte que la capacité surfacique soit de 3,8 mAh/cm². Après évaporation du solvant, l'électrode est calandrée pour atteindre une porosité de 35%.

A température ambiante, cet accumulateur possède une énergie nominale pouvant dépasser 160 Wh/kg.

### Exemple 5.- Formation dudit matériau composite d'électrode selon l'invention selon une étape de mécanosynthèse industrialisable

1500 g de Fe₃(PO₄)₂•8H₂O, 366 g de phosphate de lithium Li₃PO₄, 31 g de phosphate de bore BPO₄ et 150 g de cellulose sont introduits dans un conteneur de transfert de 5 litres (par exemple : bouteille en verre dont le bouchon est remplacé par une vanne), servant également de récipient de dosage et de prémélange. Le contenu du conteneur est inerté par balayage d'argon pendant 10 min avec un débit de 6 l/min, puis refermé. Le conteneur est agité manuellement pendant environ 2 minutes pour mélanger les poudres jusqu'à obtenir un mélange de couleur uniforme.

La poudre prémélangée est transférée de manière confinée et sous argon dans la cuve de broyage d'un broyeur à haute énergie Simoloyer®, disponible auprès de la société Zoz GmbH, grâce un système de connexion étanche. La cuve est en acier inoxydable, possède un volume interne de 20 litres, est équipée d'un rotor en stellite et est partiellement remplie avec 25 kg de billes en acier 100C6 de diamètre 5 mm. La cuve est maintenue sous argon statique. Si nécessaire après chargement de la poudre, la cuve est réinertée (3 mises sous vide et remises sous argon) afin que l'atmosphère à l'intérieur soit exempte d'oxygène au cours du broyage.

La cuve est refroidie par une circulation d'eau de 12 litres par minutes dans la double enveloppe constituant ses parois. Le broyage est démarré, la vitesse de rotation du rotor est de 750 tours par minute dans le but de réaliser un broyage énergétique. La durée du broyage est de 15 minutes. Le déchargement de la poudre s'effectue de manière confinée et sous balayage d'argon, la sortie de la cuve est connectée à un conteneur de récupération de 3 litres. La vitesse de rotation du rotor est de 750 tours par minute pendant le déchargement qui dure 15 minutes.

Les précurseurs de synthèse sont maintenant activés (mélange intime nanostructuré). La poudre peut être stockée sous argon en attendant d'être traitée thermiquement.

Un prélèvement effectué après 15 minutes de broyage (avant déchargement) et un prélèvement effectué en fin de déchargement (soit 30 minutes de broyage effectif) sont traités thermiquement selon les modalités de calcination de l'exemple 2, mis en accumulateur lithium-métal et testés selon les modalités de l'exemple 3.

A température ambiante, sous un régime de C/10, les accumulateurs respectifs délivrent une capacité spécifique de 157 mAh/g (pour 15 minutes de broyage) et 155 mAh/g (pour 15 minutes de broyage plus 15 minutes de déchargement).

### Exemple 6.- Formation dudit matériau composite d'électrode selon l'invention selon une étape de mécanosynthèse industrialisable

4500 g de Fe₃(PO₄)₂•8H₂O, 1152 g de phosphate de lithium Li₃PO₄, 30 g de phosphate de bore BPO₄ et 464 g de cellulose sont introduits dans la cuve de broyage d'un broyeur à haute énergie de type attriteur, disponible auprès de la société Union Process. La cuve est en acier inoxydable, possède un volume interne de 35 litres, est équipée d'un agitateur en acier inoxydable et est remplie de billes en acier 100C6.

La cuve est refroidie en continu. Le broyage est démarré, la vitesse de rotation de l'agitateur est de 230 tours par minute dans le but de réaliser un broyage énergétique. La durée du broyage est de 2 heures.

Les précurseurs de synthèse sont maintenant activés (mélange intime nanostructuré). La poudre peut être stockée sous argon en attendant d'être traitée thermiquement.

Un prélèvement représentatif effectué sur le lot déchargé est traité thermiquement selon les modalités de calcination de l'exemple 2, mis en accumulateur lithium-métal et testé selon les modalités de l'exemple 3.

A température ambiante, sous un régime de C/10, l'accumulateur délivre une capacité spécifique de 158 mAh/g.

### Exemples comparatifs.-

L'exemple 3 a été reproduit à plusieurs reprises à l'exception du fait que le type et la durée du broyage ont été modifiés pour le mélange de précurseurs. Les données des exemples comparatifs ont été comparées à celles obtenues avec les exemples 2, 5 et 6.

Le tableau ci-dessous regroupe les valeurs de capacités spécifiques mesurées à un régime de C/10 en décharge pour des électrodes fines et épaisses fabriquées et testées en accumulateur lithium-métal de type « pile-bouton » selon l'exemple 3.

| N° d'exemple comparatif | Broyeur | billes | Vitesse relative maximale des billes (m/s) | Durée de broyage | CSF | CSE |
|---|---|---|---|---|---|---|
| EC1 | à billes planétaire | Carbure de W | 2,6 | 4 X 1 h | 154 | 143 |
| Ex 2 | | | 5,2 | 1 h | 160 | 158 |
| EC2 | Attriteur | Acier | 1,0 | 4 h | 143 | 127 |
| EC3 | | Acier | 1,0 | 10 h | 158 | 143 |
| Ex 6 | | Acier | 2,85 | 2 h | 158 | 153 |
| EC4 | Simoloyer ® | Acier | 3,75 | 4 h | 136 | 124 |
| EC5 | | Acier | 3,75 | 16 h | 153 | 148 |
| Ex 5 | | Acier | 11,25 | 15 min | 157 | 152 |

CSF = Capacité spécifique à C/10 pour électrode fine de l'ordre de 0,4 mAh/cm² (mAh/g)

CSE = Capacité spécifique à C/10 pour électrode épaisse de l'ordre de 4 mAh/cm² (mAh/g)

Pour les broyeurs où l'inertie des billes joue un rôle prépondérant (tels que planétaire et Simoloyer®, contrairement aux attriteurs), la nature des billes via la densité de leur matériau (carbure de tungstène : 14 g/cm³, acier 7,8 g/cm³) influe sur la durée de broyage pour atteindre un même état morphologique de la poudre (taille et compacité des agrégats mixtes micrométriques et taille des particules nanométriques). Cet état dépend principalement de l'énergie totale de broyage transmise à la poudre, qui en première approximation varie proportionnellement avec :
▪ la densité du matériau des billes de broyage
▪ le carré de la vitesse relative maximale des billes de broyage
▪ le temps de broyage (en l'absence de colmatage)

Comme on peut le constater, l'exemple comparatif 1 ne permet pas d'obtenir une production de phosphate de fer lithié dopé au bore/C de manière industrielle d'une part parce qu'il a été effectué dans un broyeur de type planétaire de laboratoire ayant une capacité maximale de 250 ml. Lors de la réalisation de l'exemple comparatif 1, un colmatage a eut lieu, probablement dû à la nature des précurseurs utilisés qui contiennent de l'eau. Le récipient du broyeur planétaire a fait l'objet de décolmatage manuel à plusieurs reprises (toutes les heures), qui, sans pour autant être suffisant, présente un risque accru de contaminations possibles du produit. En conséquence, l'énergie transmise par les billes aux précurseurs n'était vraisemblablement pas assez élevée. Une capacité surfacique de 143 mAh/g pour une électrode épaisse de l'ordre de 4 mAh/cm² à C/10 n'est pas suffisante pour une exploitation selon les besoins du marché de ce composé obtenu.

L'exemple 2 a permis quant à lui d'obtenir des électrodes minces et épaisses satisfaisantes avec une durée de broyage réduite à 1h dans un broyeur planétaire. Ceci est particulièrement surprenant au vu des durées de broyage divulguées dans les documents antérieurs, comprises généralement entre 8 et 10 heures. Malheureusement, les broyeurs planétaires de laboratoires ne permettent pas de produire le matériau d'électrode à l'échelle industrielle, mais cet exemple constitue une bonne référence pour les caractéristiques souhaitées du produit selon l'invention. En outre, les billes étaient en carbure de tungstène, ce qui a permi d'améliorer l'efficacité du broyage et de développer l'énergie mécanochimique suffisante pour obtenir un matériau de cathode présentant les caractéristiques électro-chimiques avantageuses selon l'invention et sous forme d'agrégats micrométriques mixtes de particules nanométriques.

Les exemples comparatifs 2 et 3 ont été réalisés sur un attriteur d'une capacité de 2,5 litres avec des billes en acier. La vitesse relative maximale des billes était de 1m/sec. Un racleur a été utilisé pour décolmater en continu le contenu de l'attriteur. Malgré ce décolmatage permanent, l'énergie conférée aux précurseurs contenus n'était pas suffisante pour fournir un produit satisfaisant pour les applications d'électrodes minces ou épaisses. De plus, dans l'exemple comparatif 3, le temps de broyage a été prolongé jusqu'à 10 heures pour contrecarrer la perte d'énergie conférée aux précurseurs en cours de broyage, sans que cela soit suffisant pour que la capacité surfacique CFE soit satisfaisante, même si la valeur de CSF (capacité surfacique en électrode fine) était satisfaisante.

Les exemples comparatifs 4 et 5 ont été réalisés sur un broyeur Simoloyer® avec une vitesse relative maximale des billes de 3,75 m/sec. Toutefois un colmatage important a été observé et même une durée prolongée du temps de broyage n'a pas pu contrecarrer la perte de l'énergie conférée aux précurseurs contenus dans le broyeur. De plus, pour de tels broyeurs très consommateurs d'énergie, des durées de broyage de 4 heures et encore plus de 16 heures ne sont pas acceptables pour une production rentable à grande échelle. Ces exemples comparatifs ne sont pas industrialisables, sans compter que les performances électro-chimiques ne sont pas satisfaisantes, que ce soit en électrodes épaisses ou en électrodes minces.

L'exemple 5 selon l'invention a été réalisé dans les mêmes conditions que les exemples comparatifs 4 et 5, à l'exception du fait que le temps de broyage a été réduit à 15 minutes et que la vitesse relative maximale des billes était de 11,25 m/sec. Comme on peut le constater, les valeurs de capacité spécifique à C/10 pour une électrode fine de l'ordre de 0,4 mAh/cm² (mAh/g) et de capacité spécifique à C/10 pour électrode épaisse de l'ordre de 4 mAh/cm² (mAh/g) étaient respectivement de 157 et de 152 mAh/g, ce qui est tout à fait satisfaisant pour la demande du marché. En outre, le procédé est industrialisable puisque la consommation d'une étape de broyage de 15 minutes à 11,25 m/sec est peu élevée et ce type de broyeur existe à grande échelle et est exploitable dans un procédé de production.

L'exemple 6 selon l'invention a été réalisé dans les mêmes conditions que les exemples comparatifs 2 et 3 à l'exception du fait que le temps de broyage a été réduit à 2 heures et que la vitesse relative maximale des billes était de 2,85 m/sec, moyennant décolmatage continu comme dans les exemples comparatifs 2 et 3.

Comme on peut le constater, les valeurs de capacité spécifique à C/10 pour une électrode fine de l'ordre de 0,4 mAh/cm² (mAh/g) et de capacité spécifique à C/10 pour électrode épaisse de l'ordre de 4 mAh/cm² (mAh/g) étaient respectivement de 158 et de 153 mAh/g, ce qui est tout à fait satisfaisant pour la demande du marché et industriablisable.

## Revendications

1. Matériau d'électrode présentant la formule suivante Li_{α}Fe_{β}B_{γ}PO₄/C dans laquelle 0,85 ≤ α ≤ 1,08, 0 ≤ γ/β ≤ 0,1 et γ + β ≤1, **caractérisé en ce qu'**il se présente sous la forme d'agrégats microforgés mixtes micrométriques de particules nanométriques, lesdites particules nanométriques présentant une taille maximale mesurée par microscopie par transmission inférieure à 50 nm et lesdits agrégats mixtes micrométriques présentant une taille moyenne (D50) mesurée par granulométrie laser dans du méthanol comprise entre 0,5 et 60 µm,

2. Matériau d'électrode selon la revendication 1, dans lequel lesdits agrégats mixtes micrométriques présentent une taille moyenne (D50) mesurée par granulométrie laser dans du méthanol comprise entre 1 et 45 µm.

3. Matériau d'électrode selon la revendication 1 ou la revendication 2, dans lequel lesdits agrégats mixtes micrométriques présentent une taille moyenne (D50) mesurée par granulométrie laser dans du méthanol comprise entre 2 et 15 µm.

4. Matériau d'électrode selon l'une quelconque des revendications 1 à 3, présentant la formule suivante LiFe_{β}B_{γ}PO₄/C dans laquelle γ + β <1.

5. Matériau d'électrode selon la revendication 4 présentant la formule LiFe_{0,95}B_{0,033}PO₄/C.

6. Matériau d'électrode selon l'une quelconque des revendications 1 à 5, dans lequel la teneur en carbone résiduel est strictement comprise entre 1 et 3% en poids par rapport au poids dudit matériau d'électrode.

7. Matériau d'électrode selon l'une quelconque des revendications 1 à 6, dans lequel la densité tapée vaut entre 0,8 et 1,5 g/cm³.

8. Matériau d'électrode selon la revendication 7, dans lequel la densité tapée vaut environ 1,1 g/cm³.

9. Matériau d'électrode selon l'une quelconque des revendications 1 à 8, dans lequel la surface spécifique mesurée selon la méthode BET vaut de 12 à 24 m²/g.

10. Matériau d'électrode selon la revendication 9, dans lequel la surface spécifique mesurée selon la méthode BET vaut de 16 à 22 m²/g.

11. Matériau d'électrode selon la revendication 9 ou ma revendication 10, dans lequel la surface spécifique mesurée selon la méthode BET vaut de 18 à 20 m²/g.

12. Matériau d'électrode selon l'une quelconque des revendications 1 à 11, dans lequel la taille moyenne des particules, D50 mesurée par granulométrie laser dans du méthanol, est comprise entre 3 et 8 µm.

13. Electrode à base de matériau composite de phosphate de fer lithié et de carbone selon l'une des revendications 1 à 12, présentant, à une capacité surfacique inférieure à 2 mAh/cm², une capacité spécifique pratique d'électrode comprise entre 150 et 170 mAh/g, de préférence entre 155 et 170 mAh/g.

14. Electrode à base de matériau composite de phosphate de fer lithié et de carbone selon l'une quelconque des revendications 1 à 12, présentant, à une capacité surfacique comprise entre 2 et 4 mAh/cm², , une capacité spécifique pratique supérieure à 150 mAh/g et inférieure à 170 mAh/g.

15. Electrode selon la revendication la revendication 13 ou la revendication 14, comprenant en outre un ou plusieurs additifs conducteurs électroniques et un ou plusieurs liants organiques.

16. Electrode selon la revendication 15, dans laquelle ledit un ou plusieurs additifs conducteurs électroniques est choisi dans le groupe constitué des fibres de carbone, du noir de carbone, de nanotubes de carbone.

17. Electrode selon l'une quelconque des revendications 15 à 16, dans laquelle ledit matériau d'électrode est présent en une quantité allant de 80 à 92 % en poids par rapport au poids total de l'électrode.

18. Electrode selon l'une quelconque des revendications 15 à 17, dans laquelle ledit un ou plusieurs additifs conducteurs électroniques est présent en une quantité allant de 4 à 14 % en poids par rapport au poids total de l'électrode.

19. Electrode selon l'une quelconque des revendications 15 à 18, dans laquelle ledit un ou plusieurs liants organiques est présent en une quantité allant de 4 à 10 % en poids par rapport au poids total de l'électrode.

20. Electrode selon l'une quelconque des revendications 14 à 20, présentant une porosité comprise entre 50 et 25 %.

21. Cellule électrochimique Li-ion comprenant une électrode selon l'une quelconque des revendications 14 à 20.

22. Cellule électrochimique selon la revendication 21, comprenant en outre une électrode négative de carbone et un électrolyte conducteur des ions Li⁺.

23. Cellule électrochimique selon la revendication 21 ou la revendication 22, présentant une densité d'énergie massique comprise entre 160 à 180 Wh/kg.

## Patentansprüche

1. Elektrodenmaterial mit der folgenden Formel Li_{α}Fe_{β}B_{γ}PO₄/C, wobei 0,85 ≤ α ≤ 1,08, 0 ≤ γ/β ≤ 0,1 und γ + β ≤ 1, **dadurch gekennzeichnet, dass** es in Form mikrometrischer, mikrogeschmiedeter Mischaggregate von nanometrischen Partikeln vorliegt, wobei die nanometrischen Partikel eine maximale Größe, gemessen durch Transmissionsmikroskopie, von weniger als 50 nm aufweisen und die mikrometrischen Mischaggregate eine durchschnittliche Größe (D50), gemessen durch Laser-Granulometrie in Methanol, von zwischen 0,5 und 60 µm aufweisen.

2. Elektrodenmaterial nach Anspruch 1, wobei die mikrometrischen Mischaggregate eine durchschnittliche Größe (D50), gemessen durch Laser-Granulometrie in Methanol, von zwischen 1 und 45 µm aufweisen.

3. Elektrodenmaterial nach Anspruch 1 oder Anspruch 2, wobei die mikrometrischen Mischaggregate eine durchschnittliche Größe (D50), gemessen durch Laser-Granulometrie in Methanol, von zwischen 2 und 15 µm aufweisen.

4. Elektrodenmaterial nach irgendeinem der Ansprüche 1 bis 3, mit der folgenden Formel LiFe_{β}B_{γ}PO₄/C, wobei γ + β < 1.

5. Elektrodenmaterial nach Anspruch 4 mit der Formel LiFe_{0,95}B_{0,033}PO₄/C.

6. Elektrodenmaterial nach irgendeinem der Ansprüche 1 bis 5, wobei der Gehalt an Restkohlenstoff strikt zwischen 1 und 3 Gew.-% im Verhältnis zum Gewicht des erwähnten Elektrodenmaterials liegt.

7. Elektrodenmaterial nach irgendeinem der Ansprüche 1 bis 6, wobei die Klopfdichte zwischen 0,8 und 1,5 g/cm³ beträgt.

8. Elektrodenmaterial nach Anspruch 7, wobei die Klopfdichte ungefähr 1,1 g/cm³ beträgt.

9. Elektrodenmaterial nach irgendeinem der Ansprüche 1 bis 8, wobei die spezifische Oberfläche, gemessen nach dem BET-Verfahren, 12 bis 24 m²/g beträgt.

10. Elektrodenmaterial nach dem Anspruch 9, wobei die spezifische Oberfläche, gemessen nach dem BET-Verfahren, 16 bis 22 m²/g beträgt.

11. Elektrodenmaterial nach dem Anspruch 9 oder dem Anspruch 10, wobei die spezifische Oberfläche, gemessen nach dem BET-Verfahren, 18 bis 20 m²/g beträgt.

12. Elektrodenmaterial nach irgendeinem der Ansprüche 1 bis 11, wobei die durchschnittliche Größe der Partikel D50, gemessen durch Laser-Granulometrie in Methanol, zwischen 3 und 8 µm liegt.

13. Elektrode aus Verbundmaterial von Lithiumeisenphosphat und Kohlenstoff nach irgendeinem der Ansprüche 1 bis 12, die, bei einer Flächenkapazität von weniger als 2 mAh/cm², eine spezifische praktische Elektrodenkapazität von zwischen 150 und 170 mAh/g aufweist, bevorzugt zwischen 155 und 170 mAh/g.

14. Elektrode aus Verbundmaterial von Lithiumeisenphosphat und Kohlenstoff nach irgendeinem der Ansprüche 1 bis 12, die, bei einer Flächenkapazität von zwischen 2 und 4 mAh/cm², eine spezifische praktische Kapazität von mehr als 150 mAh/g und weniger als 170 mAh/g aufweist.

15. Elektrode nach Anspruch 13 oder Anspruch 14, welche ferner einen oder mehrere elektronische, leitende Zusätze und einen oder mehrere organische Bindemittel umfasst.

16. Elektrode nach Anspruch 15, wobei der oder die mehreren elektronischen, leitenden Zusätze aus der Gruppe bestehend aus Kohlenstofffasern, Kohlenschwarz, Kohlenstoffnanorohren ausgewählt wird.

17. Elektrode nach irgendeinem der Ansprüche 15 bis 16, wobei das Elektrodenmaterial in einer Menge von 80 bis 92 Gew.-% im Verhältnis zum Gesamtgewicht der Elektrode vorhanden ist.

18. Elektrode nach irgendeinem der Ansprüche 15 bis 17, wobei der oder die mehreren elektronischen, leitenden Zusätze in einer Menge von 4 bis 14 Gew.-% im Verhältnis zum Gesamtgewicht der Elektrode vorhanden ist.

19. Elektrode nach irgendeinem der Ansprüche 15 bis 18, wobei das oder die erwähnten mehreren organischen Bindemittel in einer Menge von 4 bis 10 Gew.-% im Verhältnis zum Gesamtgewicht der Elektrode vorhanden ist.

20. Elektrode nach irgendeinem der Ansprüche 14 bis 20, mit einer Porosität von zwischen 50 und 25 %.

21. Elektrochemische Li-Ionen-Zelle, welche eine Elektrode nach irgendeinem der Ansprüche 14 bis 20 umfasst.

22. Elektrochemische Zelle nach Anspruch 21, welche ferner eine negative Kohlenstoffelektrode und ein leitendes Elektrolyt der Li⁺-Ionen umfasst.

23. Elektrochemische Zelle nach Anspruch 21 oder Anspruch 22, welche eine Massenenergiedichte von zwischen 160 und 180 Wh/kg aufweist.

## Claims

1. Electrode material having the folowing formula Li_{α}Fe_{β}B_{γ}PO₄/C wherein 0.85 ≤ α ≤ 1.08, 0 ≤ γ/β ≤ 0.1 and γ + β ≤1, **characterised in that** it is in the form of micro-forged micrometric mixed aggregates of nanometric particles, said nanometric particles having a maximum size measured by transmission microscopy of less than 50 nm and said micrometric mixed aggregates having an average size (D50) measured by laser diffraction analysis in methanol comprised between 0.5 and 60 µm,

2. Electrode material according to claim 1, wherein said micrometric mixed aggregates have an average size (D50) measured by laser diffraction analysis in methanol comprised between 1 and 45 µm.

3. Electrode material according to claim 1 or claim 2, wherein said micrometric mixed aggregates have an average size (D50) measured by laser diffraction analysis in methanol comprised between 2 and 15 µm.

4. Electrode material according to any one of the claims 1 to 3, having the following formula LiFe_{β}B_{γ}PO₄/C wherein γ + β <1.

5. Electrode material according to claim 4 having the formula LiFe_{0.95}B_{0.033}PO₄/C.

6. Electrode material according to any one of the claims 1 to 5, wherein the residual carbon content is strictly comprised between 1 and 3 % by weight with respect to the weight of said electrode material.

7. Electrode material according to any one of the claims 1 to 6, wherein the packed density ranges between 0.8 and 1.5 g/cm³.

8. Electrode material according to claim 7, wherein the packed density is approximately 1.1 g/cm³.

9. Electrode material according to any one of the claims 1 to 8, wherein the specific surface measured according to the BET method ranges from 12 to 24 m²/g.

10. Electrode material according to claim 9, wherein the specific surface measured according to the BET method ranges from 16 to 22 m²/g.

11. Electrode material according to claim 9 or claim 10, wherein the specific surface measured according to the BET method ranges from 18 to 20 m²/g.

12. Electrode material according to any one of claims 1 to 11, wherein the average particle size, D50, measured by laser diffraction analysis in methanol comprised between 3 and 8 µm.

13. Electrode based on a composite material of lithium iron phosphate and carbon according to any one of the claims 1 to 12, having, at a capacitance density of less than 2 mAh/cm², a practical electrode-specific capacity comprised between 150 and 170 mAh/g, preferably between 155 and 170 mAh/g.

14. Electrode material based on a composite material of lithium iron phosphate and carbon according to any one of the claims 1 to 12, having, at a capacitance density comprised between 2 and 4 mAh/cm², a practical specific capacity higher than 150 mAh/g and less than 170 mAh/g.

15. Electrode according to claim 13 or claim 14, further comprising one or more electronically-conductive additives and one or more organic binders.

16. Electrode according to claim 15, wherein said one or more electronically-conductive additives are selected from the group consisting of carbon fibres, carbon black, and carbon nanotubes.

17. Electrode according to any one of the claims 15 to 16, wherein said electrode material is present in a quantityranging from 80 to 92 % by weight with respect to the total weight of the electrode.

18. Electrode according to any one of the claims 15 to 17, wherein said one or several electronically-conductive additives is present in a quantity ranging from 4 to 14 % by weight with respect to the total weight of the electrode.

19. Electrode according to any one of the claims 15 to 18, wherein said one or several organic binders is present in a quantity ranging from 4 to 10 % by weight with respect to the total weight of the electrode.

20. Electrode according to any one of the claims 14 to 20, having a porosity comprised between from 50 and 25 %.

21. Li-ion electrochemical cell comprising an electrode according to any one of the claims 14 to 20.

22. Electrochemical cell according to claim 21, further comprising a negative carbon electrode and a Li⁺ ion-conducting electrolyte.

23. Electrochemical cell according to claim 21 or claim 22, having a density of mass energy ranging from 160 to 180 Wh/kg.
